# EUROPEAN PATENT APPLICATION

(11) **EP 1 972 205 A1**
(43) Date of publication of application: **24.09.2008**
(21) Application number: 06822356.9
(22) Date of filing: 26.10.2006
(51) Int. Cl.: A23L 1/238, A23L 1/202

(54) **SEED KOJI FOR BREWING, KOJI FOR BREWING, BREWED FOODS AND METHOD OF PRODUCING THE SAME**

(30) Priority: 17.11.2005 JP 2005332540
(71) Applicant: KIKKOMAN CORPORATION, Noda-shi, Chiba 278-8601 (JP)
(72) Inventor: SATO, Yo, Kikkoman Corporation, Noda-shi, Chiba 2788601 (JP)
(74) Representative: Strehl Schübel-Hopf & Partner
(86) International application number: PCT/JP2006/321384
(87) International publication number: WO 2007/058061

(57) **Abstract**

[PROBLEMS] To provide a seed *koji* for brewing, which is suitable for wheat allergy patients and wheat intolerance patients (patients with celiac disease) and the medium of which is completely free from wheat-origin component, a *koji* for brewing, brewed foods and a method of producing the same. [MEANS FOR SOLVING PROBLEMS] Whole soybeans are hulled. *Akoji* mold belonging to the genus *Aspergillus* is inoculated into the soybean hull thus obtained and cultured therein to give a solid seed *koji.* By using this seed *koji,* brewed foods (for example, soy sauce, *miso,* a liquid seasoning and so on) free from wheat-origin component are produced. Thus, it is possible to obtain a seed *koji* which is free from wheat-origin component, shows a high sporulation rate of the *koji* mold and has excellent *koji*-making properties. Use of this seed *koji* makes it possible to produce brewed foods which are comparable in qualities to the brewed foods produced by using a seed *koji* which has been cultured in a wheat medium.

## Description

### Technical Field

The present invention relates to a method for producing a seed koji showing a high sporulation rate, which does not comprise wheat-origin components in its production processes, to a koji for brewing (brewing koji) and brewing foods produced by using the seed koji, and to a method for producing them.

### Background Arts

Since the number of wheat allergy patients and wheat intolerance (Celiac disease: a genetically determined disease known as "gluten intolerance") patients has recently increased, it is desired to produce brewed foods that is suitable for these patients by using a medium that is completely free from wheat-origin components such as bran. For that purpose, it is also desired to produce a seed koji that is completely free from the wheat-origin components, a brewing koji completely free from the wheat-origin components by using the seed koji and, and brewed foods by using said koji. Thus, when it is tried to produce brewed foods such as soy sauce, "miso" (soybean paste) and a liquid seasoning that are completely free from the wheat-origin components, it will be necessary to use a medium that is completely free from the wheat-origin components not only during the production of the koji for brewing but also even at such an early stage as that of the production of the seed koji.

The production of the seed koji comprises inoculation and culture of koji mold to a bran medium prepared by the treatment of raw material for the purpose of production of the spores of the koji mold. Conventional methods for producing the seed koji use a medium containing exclusively bran or partially modified bran as a solid medium. The medium is dispersed on a flat plate, and subjected to pressurization and heating in the presence of an appropriate amount of moisture in a sealed system. After sterilization, 0.01 - 0.1% by weight of the spores of the koji mold per solid components of the medium are sprayed onto the surface of the medium under an aseptic condition and cultured under warming. The bran will take a role as a spacer to prevent a physical inhibition of elongation of the koji mycelia into the medium due to adhesion of medium texture and will make the solid medium maintain its air permeability to be suitable for the culture of koji mold.

On the other hand, if the seed koji is produced by using a solid medium that is completely free from the wheat-origin components, the medium will not be of such properties suitable for the culture of the koji mold as described above because the bran tacting as the spacer can not be utilized as a medium component any more. As a result, it will be difficult for the koji mycelia to make its way into the solid medium and proliferate therein, and a sporulation rate will be reduced.

For example, in the production of the seed koji for brewing soy sauce by using a medium exclusively made of soybean, examination was done with respect to factors that will affect growth of the koji mold and adhesion and insertion of the spores, such as moisture, temperature, time for the production of koji (koji-making), ventilating conditions and a kind of the koji mold, but ended up failing to obtain a seed koji with a sufficient sporulation rate. If a seed koji showing a low sporulation rate is used, the koji mold will not be sufficiently made and their production of enzymes for koji-making will be decreased. The decrease in production rate of a protease would then slow down the progress of degradation of proteins into amino acids, leading to decrease of "umami" (delicious taste) of soy sauce. And the decrease in production rate of an amylase would slow down the progress of degradation of origins of sugar so as to reduce an amount of a glucose to be utilized by a yeast, making it difficult for the yeast to progress an adequate alcohol fermentation. Furthermore, contribution of sugars to the taste of soy sauce would be reduced as well so that taste of the resulting soy sauce will not be enough. Also, it has been recognized that the decrease in an amount of a pectinase and a cellulase would inhibit decomposition of the cell wall of raw materials so that "moromi" (a mixture made mainly of the koji mold and salt solution) would become hard to squeeze, finally reducing the productivity. There is a prior art concerning a production of seed koji without using the wheat-origin components (Non-patent document 1). It discloses an invention relating to a composition for a solid culture of mold, which comprises a complex that is prepared by mixing "okara" (a cake obtained after squeezing soy milk) and chitosan under an acidic condition, followed by neutralizing, and freeze-drying or extruder-treatment. This invention concerns an effective utilization of the "okara", a by-product in the production of soybean curd. The above composition is used as a medium for the production of spore of mold, a medium for obtaining enzymes produced by the mold, and a mold-starter for the inoculation of the mold for the production of cheese. The composition is also used as a solid medium for obtaining the seed koji for brewing of sake, soy sauce, miso, seasoning, etc. However, the seed koji obtained by using the medium containing the chitosan component is not suitable for the above traditional brewed foods such as sake, miso and soy sauce.

Furthermore, there is an invention relating to a method for making koji by using puffed raw material for brewing, which comprises mixing whole or defatted soybeans that are treated with puffing and koji mold culture and growing the koji mold (Non-patent document 2). However, as this invention uses a liquid seed koji, it cannot be practically used in an industrial production as the solid seed koji for brewing sake, miso and soy sauce.
Non-patent document 1: Japanese Patent No.3101887
Non-patent document 2: Japanese Patent No.3277640

### Disclosure of Invention

### Problems to be solved by the invention

The purpose of the present invention is therefore to produce a seed koji showing a high sporulation rate and having excellent koji-making properties by using a medium that is completely free from the wheat-origin components in order to cope with the increase of wheat allergy patients and wheat intolerance (Celiac disease) patients, and to provide a method for producing koji for brewing, which are completely free from the wheat-origin components by using the same seed koji and brewed foods.

### Means for solving the problems

The present inventors have found that a seed koji that is completely free from wheat-origin component and showing a high sporulation rate can be produced by inoculating koji mold belonging to the genus Aspergillus to soybean hull obtained by a hulling treatment of whole soybeans or to a mixture of the soybean hull and treated soybean material, and culturing it at 20-40°C for three days or more, and that koji for brewing and brewed foods can be produced by using the seed koji, leading to the completion of the present invention.

The present invention therefore concerns the following aspects.
1. A solid seed koji that is completely free from wheat-origin components and obtainable by inoculating koji mold belonging to the genus Aspergillus to soybean hull obtained by a hulling treatment of whole soybeans or to a mixture of the soybean hull and treated soybean material, and culturing it.
2. A method for producing a solid seed koji that is completely free from wheat-origin components, comprising inoculating koji mold belonging to the genus Aspergillus to soybean hull obtained by a hulling treatment of whole soybeans or to a mixture of the soybean hull and treated soybean material, and culturing it at 20-40°C for three days or more.
3. The method according to Claim 2, wherein the treated soybean material is a material or a combination of two or more materials selected from the group consisting of crushed soybean material, cracked soybean material, defatted soybean, soybean meal, soybean germ, soybean flake powder and dry "okara".
4. A method for producing koji for brewing, comprising inoculating the solid seed koji produced by the method of Claim 2 or 3 into protein material for brewing that is completely free from the wheat-origin components, and culturing it.
5. The method for producing koji for brewing according to Claim 4, wherein the protein material for brewing is a material or a combination of two or more materials selected from the group consisting of crushed soybean material, cracked soybean material, defatted soybean, soybean meal, soybean germ, soybean flake powder and dry okara.
6. A method for producing brewed foods, which does not comprise wheat-origin components in its production processes, comprising mixing the koji for brewing produced by the method according to Claim 4 or 5 with salt, followed by fermentation and aging.

### Advantages of the Invention

The present invention provides the seed koji that shows a high sporulation rate and has excellent koji-making properties, which is completely free from the wheat-origin components that may cause problems for the wheat allergy patients and the Celiac disease patients. The present invention further makes it possible to produce brewed foods by using the seed koji completely free from the wheat-origin components, which are compatible in qualities to the brewed foods produced by using prior seed koji.

### Best Mode for Carrying Out the Invention

### (1) Seed koji for brewing and method for producing thereof

The "soybean hull obtained by a hulling treatment of whole soybeans" in the present specification means material obtained by cracking the whole soybeans and separating their hull from the resulting cracked soybean material through air-blowing. A solid medium used for producing the seed koji, which is completely free from the wheat-origin components, may be prepared by mixing the above soybean hull with water, subjecting the mixture to steam pasteurization at 120°C for 15 min and cooling. The solid medium used for the producing the seed koji may be made solely of the soybean hull, or may be made by mixing at an appropriate ratio the soybean hull and the treated soybean material that is a material or a combination of two or more materials selected from the group consisting of crushed soybean material, cracked soybean material, defatted soybean, soybean meal, soybean germ, soybean flake powder and dry "okara."

The seed koji used in the invention should be koji mold that is strictly free from contamination, and is newly isolated by means of a method that can guarantee purity in view of microbiology. For example, such koji mold may be an isolated strain obtained by sub-culturing spores isolated from commercially available soy sauce koji on a nutrition solid medium completely free from the wheat-origin for several generations, completely removing coexisting contamination, picking up spores of the thus purified and isolated strain with a manipulator and breeding it. The spores of the above isolated strain of koji mold may be then inoculated. Spores originated from several kinds of the above isolated strains that were cultured on the medium completely free from the wheat-origin components may be mixed, if necessary, and inoculated to the solid medium used for producing the seed koji.

The spores of the koji mold bout 0.1% by weight per solid components of the solid medium may be added suitably in view of growth of the koji mold, sporulation rate, and cost.

The seed koji is cultured in the solid medium for the seed koji in a warming condition, preferably at 20-40°C for an appropriate time, preferably for about 72 -192 hours. Since a temperature of the resulting seed koji deposition will change along with a development of producing processes of the seed koji, the temperature; pH; growth condition, concentration and enzyme activities of the koji mold and other microorganisms are measured and observed with time so that the deposition may be cared, if necessary, by replacing its surface part with its inner part.

### (2) Koji for brewing and method for producing thereof

The seed koji (preferably 0.01-1.5%) obtained in the above process (1) is inoculated into a koji-making medium that is completely free from the wheat-origin components and mixed so that the koji-making properties of the resulting culture will be increased significantly. The koji-making medium is made of protein material for brewing, which is a material or a combination of two or more materials selected from the group consisting of crushed soybean material, cracked soybean material, defatted soybean, soybean meal, soybean germ, soybean flake powder and dry "okara." Preferably, the seed koji containing 1 x 10⁸ - 1 x 10¹⁰ spores/g, which has a sufficient sporulation rate, is mixed to carry out the koji-making, so that the time for producing koji will be shortened, and growing condition of the koji mold in the resulting koji may be homogenized and elaborated.

Since a temperature of the resulting koji deposition will change along with a development of koji-making processes, the temperature; pH; growth condition, concentration and enzyme activities of the koji mold and other microorganisms are measured and observed with time so that the deposition may be cared, if necessary, by replacing its surface part with its inner part. The koji-making processes will usually take 36 - 60 hours.

### (3) Brewed foods and method for producing thereof

Soy sauce, which does not comprise wheat-origin components in its production processes, may be produced by mixing the koji that has been produced in (2) by inoculating the solid seed koji completely free from the wheat-origin components into the medium completely free from the wheat-origin components with salt, adding lactic acid bacteria and yeasts by a conventional method, fermenting and aging the mixture for about 6 months to obtain a matured "moromi", followed by compression, pasteurization and retention. The thus produced soy sauce, which does not comprise the wheat-origin components in its production processes, is suitable for the wheat allergy patients and Celiac disease patients.

The brewed foods such as miso and seasonings that are suitable for the wheat allergy patients and Celiac disease patients can be produced by similar processes, which do not comprise the wheat-origin components in its production processes.

The present invention will be further explained with reference to the following examples.

### (Comparative Example 1)

A medium for seed koji was prepared by directly steaming a mixture of 1,000 g of the dry "okara" and 770 g of water, followed by heating at 120°C for 15 min, and cooling. The resulting medium for the seed koji had a water content of 38-44%. The medium was placed into a vessel to become a height of about 5 cm, and the spores of koji mold belonging to the genus Aspergillus in an amount of about 0.1% by weight per the solid medium were sprayed on the surface of the medium. The culture was carried out for 7 days controlling a temperature at a range of 25-35°C to produce a solid seed koji. The number of spores per one gram of the seed koji was measured at day 4 and day 7 of the culture.

### (Comparative Example 2)

A medium for seed koji was prepared by directly steaming a mixture of 1,000 g of the crushed soybean material and 770 g of water, followed by heating at 120°C for 15 min, and cooling. The resulting medium for the seed koji had a water content of 38-44%. The medium was placed into a vessel to become the same height as in comparative example 1, and the spores of koji mold belonging to the genus Aspergillus in an amount of about 0.1% by weight per the solid medium were sprayed on the surface of the medium. The culture was carried out for 7 days controlling a temperature at a range of 25-35°C to produce a solid seed koji. The number of spores per one gram of the seed koji was measured at day 4 and day 7 of the culture.

### Example 1

A medium for seed koji was prepared by directly steaming a mixture of 1,000 g of the soybean hull obtained by a hulling treatment of whole soybeans and 770 g of water, followed by heating at 120°C for 15 min, and cooling. The resulting medium for the seed koji had a water content of 38-44%. The medium was placed into a vessel to become the same height as in comparative example 1, and the spores of koji mold belonging to the genus Aspergillus in an amount of about 0.1% by weight per the solid medium were sprayed on the surface of the medium. The culture was carried out for 7 days controlling a temperature at a range of 25-35°C to produce a solid seed koji that was completely free from the wheat-origin components. The number of spores per one gram of the seed koji was measured at day 4 and day 7 of the culture.

### Example 2

A medium for seed koji was prepared by directly steaming a mixture of 500 g of the soybean hull obtained by a hulling treatment of whole soybeans and 500 g of treated soybean material and 770 g of water, followed by heating at 120°C for 15 min, and cooling. The resulting medium for the seed koji had a water content of 38-44%. The medium was placed into a vessel to become the same height as in comparative example 1, and the spores of koji mold belonging to the genus Aspergillus in an amount of about 0.1% by weight per the solid medium were sprayed on the surface of the medium. The culture was carried out for 7 days controlling a temperature at a range of 25-35°C to produce a solid seed koji that was completely free from the wheat-origin components. The number of spores per one gram of the seed koji was measured at day 4 and day 7 of the culture. The treated soybean material was obtained by pressure and heat treatment with dry steam at 183°C, 6.2 kg/cm², for 2 sec., followed by a rapid bringing back to a normal pressure to cause explosive puff, porous and coarse texture.

### Example 3

A medium for seed koji was prepared by directly steaming a mixture of 700 g of the soybean hull obtained by hulling treatment of whole soybeans, 300 g of the crushed soybean material and 770 g of water, followed by heating at 120°C for 15 min, and cooling. The medium was placed into a vessel to become the same height as in comparative example 1, and the spores of koji mold belonging to the genus Aspergillus in an amount of about 0.1% by weight per the solid medium were sprayed on the surface of the medium. The culture was carried out for 7 days controlling a temperature at a range of 25-35°C to produce a solid seed koji that was completely free from the wheat-origin components. The number of spores per one gram of the seed koji was measured at day 4 and day 7 of the culture.

Development of the sporulation rate was observed by sampling at day 4 and day 7 of the culture after the inoculation of koji in Examples 1-3 and Comparative Examples 1 and 2. The numbers of spores per one gram of the seed koji are summarized in Tabe1.

**[Table 1]**

| | Medium composition | Day 4 of the culture | Day 7 of the culture |
|---|---|---|---|
| Comparative Example 1 | dry "okara" : the soybean hull = 100 : 0 | 1.28 x 10⁷ | 3.10 x 10⁷ |
| Comparative Example 2 | soybean : the soybean hull = 100 : 0 | 4.30 x 10⁷ | 7.30 x 10⁷ |
| Example 2 | soybean : the soybean hull = 50 : 50 | 7.90 x 10⁸ | 1.24 x 10⁹ |
| Example 3 | soybean : the soybean hull = 30 : 70 | 7.10 x 10⁸ | 1.18 x 10⁹ |
| Example 1 | soybean : the soybean hull = 0 :10 0 | 7.75 x 10⁸ | 1.38 x 10⁹ |

Table 1 shows that the seed koji suitable for koji-making was produced by steaming a medium consisting of the soybean and the soybean hull (a composition ratio of the soybean hull is 50% or more) and controlling its water content in a range of 38-44%. The resulting seed koji was completely free from the wheat-origin components and had sporulation rate of 1 x 10⁸/g or more at day 4 and 1 x 10⁹/g or more at day 7 of the culture. Germination rate of the spores was about 100% in almost all the cases.

### Example 4

The seed koji obtained in Example 1 (0. 1 % by weight), the medium of which was completely free from the wheat-origin components, was inoculated into the cracked soybean material mixed with water to 40-45% by weight of water content, cultured at 25-35°C for 4 days to obtain 1.5 kg of soy sauce koji, the medium of which was completely free from the wheat-origin components. The resulting koji was mixed with 2.3 L of salt solution having a high salt concentration, followed by the addition of lactic acid bacteria and yeasts, fermenting and aging for about 6 months. The resulting matured "moromi" was then subjected to compression, pasteurization and retention to obtain soy sauce.

Thus, the soy sauce that did not comprise the wheat-origin components in its production processes could be produced by inoculating and culturing the solid seed koji completely free from the wheat-origin components, and mixing the soy sauce koji produced by using the medium completely free from the wheat-origin components with salt followed by fermentation and aging.

The analytical data of "Koikuchi" soy sauce (A) produced by using the seed koji produced by the prior method, and "Koikuchi" soy sauce (B) produced by using the seed koji according to the present invention are summarized in Table 2.

**[Table 2]**

| | TN (%) | NaCl (%) | RS (%) | Alc (%) | pH | col | Lac (%) | Glu (%) | Glu/TN |
|---|---|---|---|---|---|---|---|---|---|
| Soy sauce (A) | 1.604 | 16.11 | 1.80 | 2.63 | 4.61 | 9 | 0.95 | 1.23 | 0.767 |
| Soy sauce (B) | 1.609 | 16.11 | 1.91 | 2.69 | 4.61 | 9 | 0.93 | 1.23 | 0.764 |

The soy sauce, which was produced by using the medium produced in the present components and the koji for brewing completely free from the wheat-origin components, was comparable in qualities to soy sauce produced by using the seed koji produced by the prior method.

### Example 5

### Koji-making was done in a practical scale.

Water was added to the cracked soybean material (800 kg) to 40-45% by weight of water content and the resulting mixture was placed with a height of 25 cm. The seed koji obtained in Example 1 (0. 1 % by weight), the medium of which was completely free from the wheat-origin components, was inoculated to the thus obtained mixture, cultured at 25-35°C for 4 days to obtain soy sauce koji, the medium of which was completely free from the wheat-origin components. The resulting soy sauce koji was mixed with 18% salt solution, followed by the addition of lactic acid bacteria and yeasts, fermenting and aging for about 6 months. The resulting matured "moromi" was then subjected to compression, pasteurization and retention to obtain the soy sauce that did not comprise the wheat-origin components in its production processes and was suitable for the wheat allergy patients and the Celiac disease patients.

## Claims

1. A solid seed koji that is completely free from wheat-origin components and obtainable by inoculating koji mold belonging to the genus Aspergillus to soybean hull obtained by a hulling treatment of whole soybeans or to a mixture of the soybean hull and treated soybean material, and culturing it.

2. A method for producing a solid seed koji that is completely free from wheat-origin components, comprising inoculating koji mold belonging to the genus Aspergillus to soybean hull obtained by a hulling treatment of whole soybeans or to a mixture of the soybean hull and treated soybean material, and culturing it at 20-40°C for three days or more.

3. The method according to Claim 2, wherein the treated soybean material is a material or a combination of two or more materials selected from the group consisting of crushed soybean material, cracked soybean material, defatted soybean, soybean meal, soybean germ, soybean flake powder and dry okara.

4. A method for producing koji for brewing, comprising inoculating the solid seed koji produced by the method of Claim 2 or 3 into protein material for brewing that is completely free from the wheat-origin components, and culturing it.

5. The method for producing koji for brewing according to Claim 4, wherein the protein material for brewing is a material or a combination of two or more materials selected from the group consisting of crushed soybean material, cracked soybean material, defatted soybean, soybean meal, soybean germ, soybean flake powder and dry okara.

6. A method for producing brewed foods, which does not comprise wheat-origin components in its production processes, comprising mixing the koji for brewing produced by the method according to Claim 4 or 5 with salt, followed by fermentation and aging.
